# EUROPEAN PATENT SPECIFICATION

(11) **EP 3 281 781 B1**
(45) Date of publication and mention of the grant of the patent: **25.09.2019**
(21) Application number: 17178259.2
(22) Date of filing: 28.06.2017
(51) Int. Cl.: B29D 30/48, B29D 30/50, B29D 30/06, B29D 30/00

(54) **BEAD CORE MANUFACTURING APPARATUS**
WULSTKERNHERSTELLUNGSVORRICHTUNG
APPAREIL DE FABRICATION DE TRINGLE

(30) Priority: 08.08.2016 JP 2016155532
(43) Date of publication of application: 14.02.2018
(73) Proprietor: Sumitomo Rubber Industries, Ltd., Kobe-shi, Hyogo-ken (JP)
(72) Inventor: FUNANE, Jyunki, Kobe-shi, Hyogo 651-0072 (JP); KUSU, Eita, Kobe-shi, Hyogo 651-0072 (JP)
(74) Representative: Manitz Finsterwald Patent- und Rechtsanwaltspartnerschaft mbB

(56) References cited:
- JP-A- S60 148 636
- JP-A- 2010 173 131
- US-A1- 2008 066 851
- US-A1- 2015 174 841

## Description

### Technical field

The present invention relates to a bead core manufacturing apparatus for forming a bead core.

### Background art

Japanese Patent Application Publication No. 2013-78902 (Patent Document 1) discloses a bead core manufacturing method in which a bead core is manufactured by winding a bead wire on a bobbin with flanges disassemblable into sectors.

US 2008/0066851 A1 discloses a bead core manufacturing apparatus comprising the features according to the preamble of claim 1.

US 2015/0174841 A1 discloses a bead core manufacturing apparatus according to a related technology.

In JP 2010 173131 A, a bead core manufacturing apparatus according to a related technology is described as well.

### Summary of the invention

The bead core has to have an inside diameter being appropriate to the tire size or the recommended wheel rim size. Therefore, in the method disclosed in Patent Document 1, it is necessary to change the bobbin to another bobbin in order to manufacture plural kinds of bead cores having different inside diameters. Such replacement work possibly decrease the production efficiency, and it is necessary to prepare and manage the plural kinds of bobbins.

In view of the circumstances as described above, the present invention was made, and a primary object of the present invention is to provide a bead core manufacturing apparatus capable of manufacturing bead cores having different inside diameters without using plural kinds of bobbins.

According to the present invention, a bead core manufacturing apparatus comprises:
an annular former having an outer peripheral surface around which a bead wire is woundable to form a bead core, wherein
the former comprises a plurality of segments, which are divided circumferentially of the former, and which have radially outer surfaces collectively forming the above-said outer peripheral surface, and
the segments are movable in respective radial directions of the former so that the above-said outer peripheral surface has plural outside diameters, and a bead wire can be wound into plural kinds of bead cores having different inside diameters.

Furthermore, the former is provided with a circumferentially extending groove in which the bead wire is woundable. The bead core manufacturing apparatus is furthermore characterized in that the segments comprise first segments and third segments in which a width of the groove is constant, as well as second segments in which the width of the groove is variable, and the second segments are arranged alternately with the first and third segments.

Therefore, in the bead core manufacturing apparatus according to the present invention, by moving the segments to different radial positions and winding a bead wire thereon, plural kinds of bead cores having different inside diameters can be manufactured without the need for the bobbin replacement work. Thus, the production efficiency can be improved.

Further, the bead core manufacturing apparatus according to the present invention may have the following features:
(1) the above-said radially outer surfaces of the segments have a curvature, and the segments are movable between a first radial position at which the outside diameter of the above-said outer peripheral surface becomes smaller than the diameter of the above-said curvature, and
   a second radial position at which the outside diameter of the above-said outer peripheral surface becomes larger than the diameter of the above-said curvature;
(2) the former is provided with a plurality of circumferentially extending grooves in each of which the bead wire is woundable;
(3) the former is provided with a circumferentially extending first groove in which the bead wire is woundable to form the bead core having a first inside diameter, and a circumferentially extending second groove in which the bead wire is woundable to form the bead core having a second inside diameter larger than the first inside diameter;
(4) each of the segments comprises a main part and a width changing part,
   the main part is provided with a part of the or each circumferentially extending groove of which groove bottom forms a part of the above-said outer peripheral surface, and
   the width changing part is movable relative to the main part to change the width of the above-said part of the circumferentially extending groove;
(5) the bead core manufacturing apparatus further comprises an expanding/contracting means for moving the segments in the respective radial directions;
(6) the expanding/contracting means comprises
   radial support portions, to which the segments are respectively fixed, and which are supported movably in the respective radial directions, and
   a driving unit for the radial support portions, and the driving unit is movable in the axial direction of the former to move the radial support portions in the respective radial directions.

### Brief description of the drawings

Fig. 1 is a schematic side view of as an embodiment of the present invention showing a contracted state of the former.
Fig. 2 is a schematic side view of the former thereof showing an expanded state in which the segments are moved radially outward.
Fig. 3 is a cross sectional view of the former in the contracted state taken along line A-A of Fig. 1.
Fig. 4 is a cross sectional view of the former in the expanded state taken along line B-B of Fig. 2.
Fig. 5 is a perspective view of a first segment shown in Fig. 4.
Fig. 6 is a perspective view of a second segment shown in Fig. 4.
Fig. 7 is a perspective view of a third segment shown in Fig. 4.

### Description of the Preferred Embodiments

Embodiments of the present invention will now be described in conjunction with accompanying drawings.

In the drawings, bead core manufacturing apparatus 1 according to the present invention comprises a wire supplying section 2 for supplying a bead wire w, and a winding section 3 in which the supplied bead wire W is wound into an annular bead core. The winding section 3 comprises an annular former 4 around which the bead wire W is wound into the bead core, and a rotating device (not shown) for rotating the former 4.

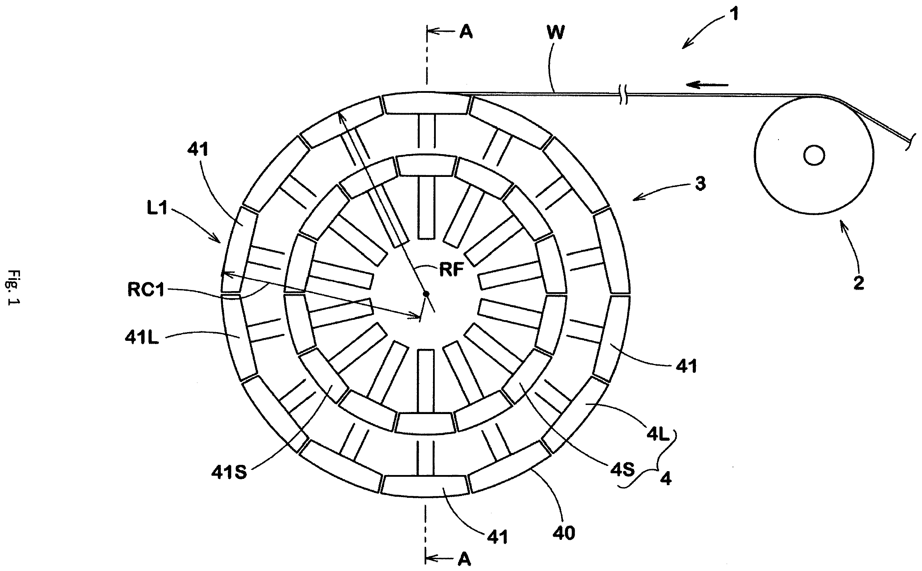

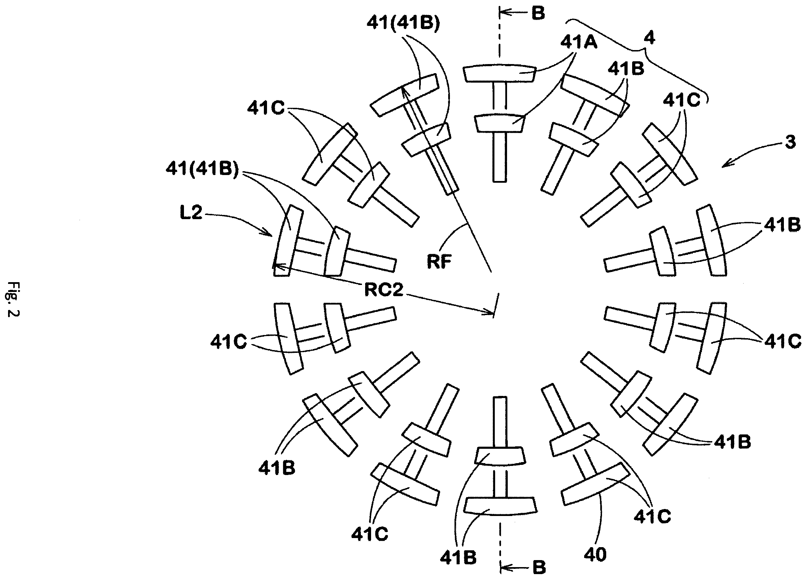

The former 4 comprises at least one set of segments 41 which are divided in the circumferential direction of the former 4, and has radially outer surfaces collectively forming an outer peripheral surface 40 on which the bead wire W is woundable. As shown in Figs. 1 and 2, in the side view, the radially outer surfaces of the respective segments 41 in each segment set have a radius RF of curvature.
The segments 41 in each segment set are movable in the respective radial directions, therefore, the above-mentioned outer peripheral surface 40 can have plural outside diameters. Accordingly, the bead wire w wound on the outer peripheral surface 40, namely, the bead core can have plural inside diameters.

Fig. 1 shows a contracted state of the former 4 in which the segments 41 in each segment set are moved radially inwardly to respective first radial positions L1 at which the outside diameter (or outside radius RC1) of the outer peripheral surface 40 is smaller than the above-mentioned radius RF of curvature of the concerned segments 41.
Thus, the bead core having an inside diameter corresponding to the outside radius RC1 which is smaller than the radius RF of curvature, can be manufactured.
In order to remove the wound bead wire, namely, bead core from the segments 41, the segments 41 are movable radially inwardly beyond the above-said first radial positions L1.

Fig. 2 shows an expanded state of the former 4 in which the segments 41 in each segment set are moved radially outwardly to respective second radial positions L2 at which the outside diameter (or outside radius RC2) of the outer peripheral surface 40 is larger than the above-mentioned radius RF of curvature of the concerned segments 41.
Thus, the bead core having an inside diameter corresponding to the outside radius RC2 which is larger than the radius RF of curvature can be manufactured.

The segments 41 can be stopped in a nonstepped manner or stepped manner at least in a movable range between the first radial position L1 and the second radial position L2. Thus, it is possible to manufacture the bead cores with a variety of inside diameters.

At each of the first radial position L1 and second radial position L2, the outer peripheral surface 40 formed by the segments 41 is slightly deviated from a perfect circle or perfect circular cylinder. However, when the wound bead core is removed from such outer peripheral surface 40, the shape of the bead core become an almost perfect circle because of the elastic deformation. Thus, there is no possibility of negative effect on the tire uniformity.

The above-mentioned movable range of the segments 41 includes a radial position at which the outside diameter or radius of the outer peripheral surface 40 becomes equal to the radius RF of curvature of the segments 41, therefore, it is possible to manufacture the bead core having an excellent roundness, while decreasing the number of segments 41 to simplify the structure of the former 4.

The winding section 3 further comprises an expanding/contracting means 5 for moving the segments 41 in the respective radial directions.

The expanding/contracting means 5 comprises a plurality of radial support portions 51, which are supported movably in the respective radial directions, and to which the segments 41 are respectively fixed, and
a driving unit 52 for the radial support portions 51.

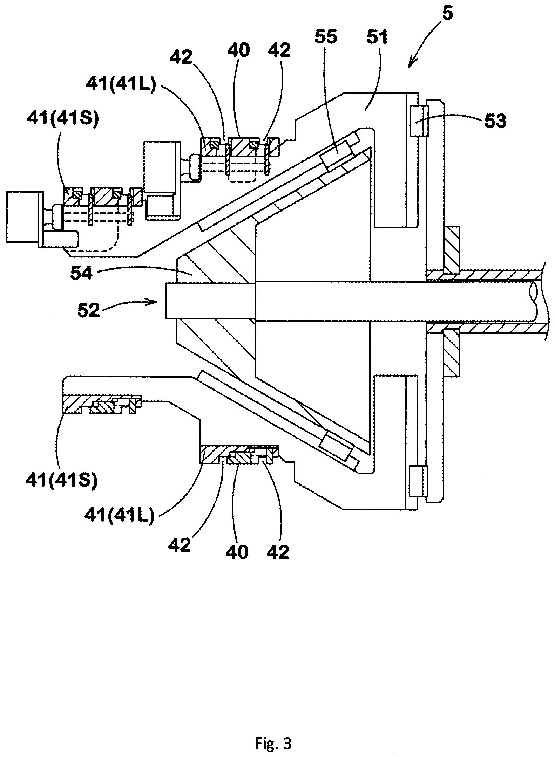

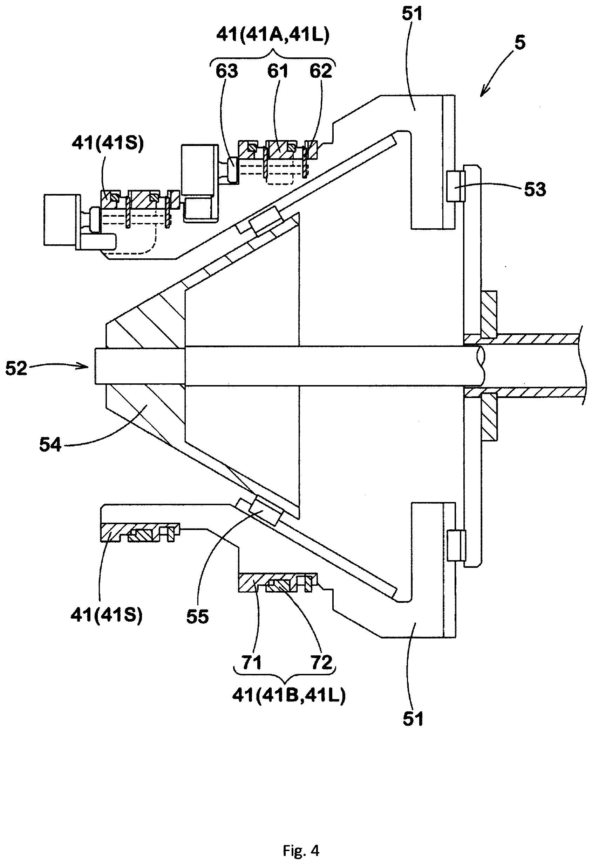

In this embodiment, as shown in Figs. 3 and 4, each of the radial support portions 51 comprises a bent plate having a substantially L- or V-shape in a cross section parallel with a plane including the central axis of the former. The bent plate is composed of a radial part supported movably in the radial direction by a slider 53, and a slant part extending radially inwardly from the radially outer edge of the radial part. The segments 41 are fixed to the radially outer surfaces of the slant parts.

In this embodiment, as shown in Figs. 3 and 4, the drive unit 52 comprises a cone part 54 having an outer surface having a circular truncated cone shape.
The cone part 54 is disposed concentrically with the central axis of the former 4, and is movable in the axial direction of the former 4.
The outer surface of the cone part 54 contacts, indirectly via sliders 55, with the slanting radially inner surfaces of the slant parts of the radial support portions 51.
Accordingly, by moving the cone part 54 in the axial direction, the radial support portions 51 can be moved in the respective radial directions. And the segments 41 can be stopped at desired radial positions to arbitrarily change the outside diameter of the outer peripheral surface 40.

The former 4 is provided with at least one groove 42, which extends in the circumferential direction of the former, and in which the bead wire w is wound.
Thereby, the bead wire w is guided during winding, and it is possible to accurately and stably manufacture the bead core. In this embodiment, the bottom of the groove 42 which forms the outer peripheral surface 40 is flat, but the bottom may be profiled according to the shape of the bead core to be manufactured. For example, the bottom may be tapered.
Preferably, two or more grooves 42 are disposed side by side in the axial direction of the former 4 in order that a plurality of bead cores can be manufactured at the same time. In this case, it is possible to configure the grooves 42 to have different radii so that bead cores having different inside diameters can be manufactured at the same time.

In this embodiment, as shown in Fig. 1, the former 4 comprises two sets of the segments 41, one set of the segments 41L and one set of the segments 41S.
The segments 41L have radially outer surfaces forming the outer peripheral surface 40 having a larger outer diameter.
The segments 41S have radially outer surfaces forming the outer peripheral surface 40 having a smaller outer diameter.
Thus, the former 4 in this embodiment can be said as a combination of a former 4L for manufacturing a bead core having a large inside diameter, and a former 4S for manufacturing a bead core having a small inside diameter.
Each set of the segments 41 is provided with two grooves 42 as shown in Fig. 3 and Fig. 4.
Fig. 3 shows the winding section 3 wherein the segments 41 are positioned at their first radial positions L1.
Fig. 4 shows the winding section 3 wherein the segments 41 are positioned at their second radial positions L2.

As shown, the segments 41S are provided with two identical first grooves 42 disposed side by side in the axial direction so as to be able to simultaneously manufacture two bead cores having the same first inside diameter. The segments 41L are provided with two identical second grooves 42 disposed side by side in the axial direction so as to be able to simultaneously manufacture two bead cores having the same second inside diameter greater than the first inside diameter. Thus, it is possible to simultaneously manufacture four bead cores having two different inside diameters.

In this embodiment, as shown in Fig. 2, each segment set (set of 41L and set of 41S) includes three kinds of the segments 41, namely, a first segment 41A, a second segment 41B and a third segment 41C.

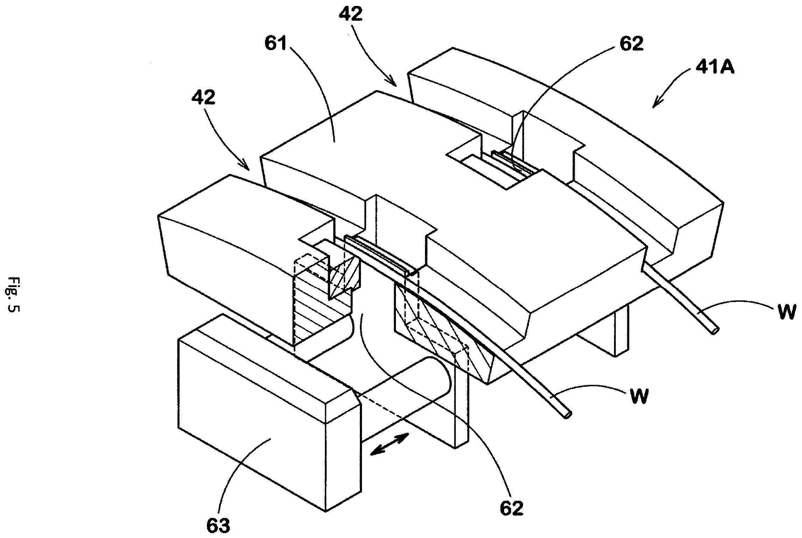

The first segment 41A is provided with a function for chucking the bead wire w, and used to chuck the winding start end of the bead wire w. Each segment set (set of 41L and set of 41S) includes at least one first segment 41A.
The first segment 41A in this embodiment is shown in Fig. 5. As shown, the first segment 41A comprises
a main part 61 provided with a circumferential part of the above-said circumferentially extending groove 42,
a chuck piece 62 disposed in the circumferential part of the groove 42 and being movable in the axial direction of the former 4, and
a driving unit 63 for moving the chuck piece 62 in the axial direction of the former 4.
By moving the chuck piece 62 toward a side wall of the above-said circumferential part of the groove 42, the bead wire w is secured between the chuck piece 62 and the groove side wall.
Thus, when winding the bead wire w within the groove 42, it is possible to hold the winding start end of the bead wire w at the predetermined circumferential position.
In the first segment 41A shown in Fig. 5, the main part 61 is provided circumferential parts of the two grooves 42, and accordingly, two sets of the chuck piece 62 and the driving unit 63 are provided.

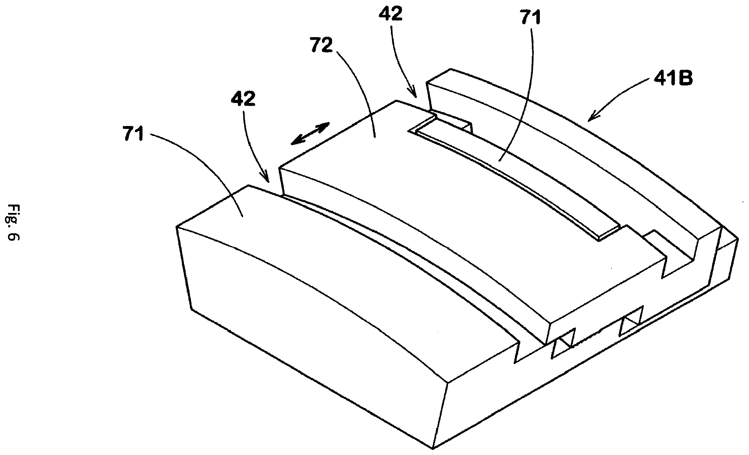

The second segment 41B is shown in Fig. 6. As shown, the second segment 41B comprises
a main part 61 provided with a circumferential part of each groove 42, and
a width changing part 72 for changing the width of the circumferential part.
The width changing part 72 constitutes one of the side walls of the above-said circumferential part of each groove 42. By moving the width changing part 72 in the axial direction of the former 4 toward the other of the side walls, the width of the groove 42 is changed. Thus, the second segment 41B serves to manufacture the bead cores having different widths.

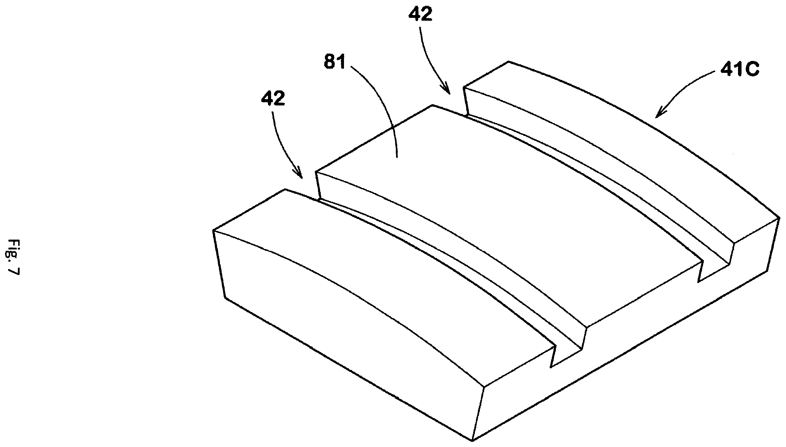

The third segment 41C is shown in Fig. 7. As shown, the above described width changing part 72, chuck piece 62 and driving unit 63 are omitted. The third segment 41C comprises a main part 81 provided with a circumferential part of each groove 42.

The groove width of each groove 42 is variable in the second segment 41B, but constant in the first segment 41A and the third segment 41C. The groove width in the first segment 41A and the groove width in the third segment 41C are larger than the maximum groove width in the second segment 41B.

In each segment set, a plurality of second segments 41B with a variable groove width can be arranged in series in the circumferential direction. But, in this embodiment in which only one first segment 41A is included in each segment set, the second segments 41B with a variable groove width are arranged alternately with the first and third segments 41A and 41C with a constant groove width in order to simply the structure of the former 4 while achieving the bead core having the desired accurate shape formed by the bead wire w wound in order.

Next, a bead core manufacturing method using the bead core manufacturing apparatus 1 is described briefly.

Firstly, according to the bead core to be manufactured, the inside diameter, width, height, number of turns, etc. are determined. According thereto, the width changing parts 72 of the second segments 41B are adjusted to an adapted groove width, and all the segments 41 are moved to a certain radial position by moving the cone part 54.
Then, the bead wire w is drawn from the wire supplying section 2, and the end of the bead wire w is chucked by the chuck piece 62 and secured to the first segment 41A.
Subsequently, the former 4 is rotated by the rotating device (not shown) such as a geared motor so that the bead wire w is wound within the groove 42, while the bead wire w is guided, for example by a guide pulley if needed.
when the bead wire w has been wound to the predetermined number of turns, the bead wire w is cut, and the cut end is fixed to the wound bead wire W. The segments 41 are moved radially inwardly, and the wound bead wire w is took out from the formed 4. Thus, the bead core is manufactured.

While detailed description has been made of a preferable embodiment of the present invention, the present invention can be embodied in various forms without being limited to the illustrated embodiment.

### Description of the reference signs

- 1: bead core manufacturing apparatus
- 4: former
- 40: outer peripheral surface
- 41: segment
- 42: groove
- 51: radial support portion
- 52: driving unit for radial support portions
- 71: main part
- 72: width changing part
- W: bead wire

## Claims

1. A bead core manufacturing apparatus (1) comprising:
an annular former (4) having an outer peripheral surface (40) on which a bead wire (W) is woundable to form a bead core,
wherein
the former (4) comprises a set of segments (41), which are divided circumferentially of the former (4), and which have radially outer surfaces collectively forming said outer peripheral surface (40), and
the segments (41) are movable in respective radial directions of the former (4) so that said outer peripheral surface (40) has plural outside diameters, and the bead wire (W) can be wound into plural kinds of bead cores having different inside diameters,
wherein the former (4) is provided with a circumferentially extending groove (42) in which the bead wire (W) is woundable,
**characterized in that**
the segments (41) comprise first segments (41A) and third segments (41C) in which a width of the groove (42) is constant, as well as second segments (41B) in which the width of the groove (42) is variable, and
the second segments (41B) are arranged alternately with the first and third segments (41A, 41C).

2. The bead core manufacturing apparatus (1) according to claim 1, wherein
said radially outer surfaces of the segments (41) have a curvature, and
the segments (41) are movable between a first radial position (L1) at which the outside diameter of said outer peripheral surface (40) becomes smaller than the diameter of said curvature, and
a second radial position (L2) at which the outside diameter of said outer peripheral surface (40) becomes larger than the diameter of said curvature.

3. The bead core manufacturing apparatus (1) according to claim 1 or 2, wherein the former (4) is provided with a plurality of circumferentially extending grooves (42) in each of which the bead wire (W) is woundable.

4. The bead core manufacturing apparatus (1) according to claim 3, wherein
the former (4) is provided with a circumferentially extending first groove (42) in which the bead wire (W) is woundable to form a bead core having a first inside diameter, and
a circumferentially extending second groove (42) in which the bead wire (W) is woundable to form a bead core having a second inside diameter larger than the first inside diameter.

5. The bead core manufacturing apparatus (1) according to any one of the claims 1-4, wherein
the second segments (41B) comprise a main part (71) and a width changing part (72),
the main part (71) is provided with a part of said circumferentially extending groove(s) (42), and
the width changing part (72) is movable relative to the main part (71) to change the width of said part of the circumferentially extending groove(s) (42).

6. The bead core manufacturing apparatus (1) according any one of the claims 1-5, which comprises an expanding/contracting means (5) for moving the segments (41) in the respective radial directions.

7. The bead core manufacturing apparatus (1) according to claim 6, wherein the expanding/contracting means (5) comprises
radial support portions (51), to which the segments (41) are respectively fixed, and which are supported movably in the respective radial directions, and
a driving unit (52) for the radial support portions (51),
wherein the driving unit (52) is movable in the axial direction of the former (4) to move the radial support portions (51) in the respective radial directions.

8. The bead core manufacturing apparatus (1) according any one of the claims 1-7, wherein the first segments (41A) each comprise a main part (61) provided with a circumferential part of the groove (42) and a chuck piece (62) disposed in the circumferential part of the groove (42) and being movable in the axial direction of the former (4).

## Patentansprüche

1. Wulstkern-Herstellungsvorrichtung (1), umfassend:
einen ringförmigen Former (4) mit einer äußeren Umfangsfläche (40), an welcher ein Wulstdraht (W) windbar ist, um einen Wulstkern zu bilden, wobei
der Former (4) einen Satz von Segmenten (41) umfasst, welche in Umfangsrichtung des Formers (4) geteilt sind und welche radial äußere Flächen aufweisen, die gemeinsam die äußere Umfangsfläche (40) bilden, und
die Segmente (41) in jeweiligen radialen Richtungen des Formers (4) derart beweglich sind, dass die äußere Umfangsfläche (40) mehrere Außendurchmesser aufweist und der Wulstdraht (W) in mehrere Arten von Wulstkernen mit unterschiedlichen Innendurchmessern gewunden werden kann,
wobei der Former (4) mit einer sich in Umfangsrichtung erstreckenden Rille (42) versehen ist, in welcher der Wulstdraht (W) windbar ist, **dadurch gekennzeichnet, dass**
die Segmente (41) erste Segmente (41A) und dritte Segmente (41C), in denen eine Breite der Rille (42) konstant ist, sowie zweite Segmente (41B) umfassen, in denen die Breite der Rille (42) variabel ist, und
die zweiten Segmente (41B) abwechselnd mit den ersten und dritten Segmenten (41A, 41C) angeordnet sind.

2. Wulstkern-Herstellungsvorrichtung (1) nach Anspruch 1, wobei
die radial äußeren Flächen der Segmente (41) eine Krümmung aufweisen und
die Segmente (41) zwischen einer ersten radialen Position (L1), bei welcher der Außendurchmesser der äußeren Umfangsfläche (40) kleiner als der Durchmesser der Krümmung wird, und
einer zweiten radialen Position (L2), bei welcher der Außendurchmesser der äußeren Umfangsfläche (40) größer als der Durchmesser der Krümmung wird, beweglich sind.

3. Wulstkern-Herstellungsvorrichtung (1) nach Anspruch 1 oder 2,
wobei der Former (4) mit mehreren sich in Umfangsrichtung erstreckenden Rillen (42) versehen ist, in welchen der Wulstdraht (W) jeweils windbar ist.

4. Wulstkern-Herstellungsvorrichtung (1) nach Anspruch 3, wobei
der Former (4) mit einer sich in Umfangsrichtung erstreckenden ersten Rille (42), in welcher der Wulstdraht (W) windbar ist, um einen Wulstkern mit einem ersten Innendurchmesser zu bilden, und
mit einer sich in Umfangsrichtung erstreckenden zweiten Rille (42) versehen ist, in welcher der Wulstdraht (W) windbar ist, um einen Wulstkern mit einem zweiten Innendurchmesser zu bilden, der größer als der erste Innendurchmesser ist.

5. Wulstkern-Herstellungsvorrichtung (1) nach einem der Ansprüche 1 - 4,
wobei
die zweiten Segmente (41B) einen Hauptteil (71) und einen sich bezüglich der Breite ändernden Teil (72) umfassen,
der Hauptteil (71) mit einem Teil der sich in Umfangsrichtung erstreckenden Rille(n) (42) versehen ist und
der sich bezüglich der Breite ändernde Teil (72) relativ zu dem Hauptteil (71) beweglich ist, um die Breite des Teils der sich in Umfangsrichtung erstreckenden Rille(n) (42) zu verändern.

6. Wulstkern-Herstellungsvorrichtung (1) nach einem der Ansprüche 1 - 5, die ein ausfahrendes/sich zusammenziehendes Mittel (5) zum Bewegen der Segmente (41) in den jeweiligen radialen Richtungen umfasst.

7. Wulstkern-Herstellungsvorrichtung (1) nach Anspruch 6, wobei das ausfahrende/sich zusammenziehende Mittel (5) umfasst
radiale Trägerabschnitte (51), an welchen die Segmente (41) jeweils befestigt sind und welche in den jeweiligen radialen Richtungen beweglich gelagert sind, und
eine Antriebseinheit (52) für die radialen Trägerabschnitte (51),
wobei die Antriebseinheit (52) in der axialen Richtung des Formers (4) beweglich ist, um die radialen Trägerabschnitte (51) in den jeweiligen radialen Richtungen zu bewegen.

8. Wulstkern-Herstellungsvorrichtung (1) nach einem der Ansprüche 1 - 7,
wobei die ersten Segmente (41A) jeweils einen Hauptteil (61), der mit einem umlaufenden Teil der Rille (42) versehen ist, und ein Spannteil (62) umfassen, das in dem umlaufenden Teil der Rille (42) angeordnet und in der axialen Richtung des Formers (4) beweglich ist.

## Revendications

1. Appareil de fabrication de tringles (1), comprenant :
un gabarit annulaire (4) ayant une surface périphérique extérieure (40) sur laquelle un fil à tringle (W) peut être enroulé pour former une tringle,
dans lequel
le gabarit (4) comprend un ensemble de segments (41) qui sont divisés dans la direction circonférentielle du gabarit (4) et qui ont des surfaces radialement extérieures formant collectivement ladite surface périphérique extérieure (40), et
les segments (41) sont mobiles dans des directions radiales respectives du gabarit (4), de sorte que ladite surface périphérique extérieure (40) a plusieurs diamètres extérieurs et que le fil à tringle (W) peut être enroulé en plusieurs types de tringle ayant des diamètres intérieurs différents,
dans lequel le gabarit (4) est pourvu d'une rainure s'étendant circonférentiellement (42), dans laquelle le fil à tringle (W) peut être enroulé,
**caractérisé en ce que** les segments (41) comprennent des premiers segments (41A) et des troisièmes segments (41C) dans lesquels une largeur de la rainure (42) est constante ainsi que des deuxièmes segments (41B) dans lesquels la largeur de la rainure (42) est variable, et
les deuxièmes segments (41B) sont disposés alternativement avec les premiers et troisièmes segments (41A, 41C).

2. Appareil de fabrication de tringles (1) selon la revendication 1, dans lequel
lesdites surfaces radialement extérieures des segments (41) présentent une courbure
et
les segments (41) sont mobiles entre une première position radiale (L1), à laquelle le diamètre extérieur de ladite surface périphérique extérieure (40) devient inférieur au diamètre de ladite courbure, et
une deuxième position radiale (L2), à laquelle le diamètre extérieur de ladite surface périphérique extérieure (40) devient supérieur au diamètre de ladite courbure.

3. Appareil de fabrication de tringles (1) selon la revendication 1 ou 2, dans lequel
le gabarit (4) est pourvu d'une pluralité de rainures s'étendant circonférentiellement (42) dans chacune desquelles le fil à tringle (W) peut être enroulé.

4. Appareil de fabrication de tringles (1) selon la revendication 3, dans lequel
le gabarit (4) est pourvu d'une première rainure s'étendant circonférentiellement (42) dans laquelle le fil à tringle (W) peut être enroulé pour former une tringle ayant un premier diamètre intérieur et
d'une deuxième rainure s'étendant circonférentiellement (42) dans laquelle le fil à tringle (W) peut être enroulé pour former un deuxième diamètre intérieur supérieur au premier diamètre intérieur.

5. Appareil de fabrication de tringles (1) selon l'une quelconque des revendications 1 à 4, dans lequel
les deuxièmes segments (41B) comprennent une partie principale (71) et une partie de changement de largeur (72),
la partie principale (71) est pourvue d'une partie de ladite ou desdites rainure(s) s'étendant circonférentiellement (42) et
la partie de changement de largeur (72) est mobile par rapport à la partie principale (71) pour changer la largeur de ladite partie de la ou des rainure(s) s'étendant circonférentiellement (42).

6. Appareil de fabrication de tringles (1) selon l'une quelconque des revendications 1 à 5, qui comprend un moyen d'expansion/contraction (5) pour déplacer les segments (41) dans les directions radiales respectives.

7. Appareil de fabrication de tringles (1) selon la revendication 6, dans lequel le moyen d'expansion/contraction (5) comprend
des portions de support radiales (51) auxquelles les segments (41) sont respectivement fixés et qui sont supportées de manière mobile dans les directions radiales respectives, et
une unité d'entraînement (52) pour les portions de support radiales (51),
l'unité d'entraînement (52) étant mobile dans la direction axiale du gabarit (4) pour déplacer les portions de support radiales (51) dans les directions radiales respectives.

8. Appareil de fabrication de tringles (1) selon l'une quelconque des revendications 1 à 7, dans lequel les premiers segments (41A) comprennent chacun une partie principale (61) pourvue d'une partie circonférentielle de la rainure (42) et une pièce de serrage (62) disposée dans la partie circonférentielle de la rainure (42) et mobile dans la direction axiale du gabarit (4).
